# EUROPÄISCHE PATENTSCHRIFT

(11) **EP 1 337 144 B1**
(45) Veröffentlichungstag und Bekanntmachung des Hinweises auf die Patenterteilung: **21.04.2004**
(21) Anmeldenummer: 01998218.0
(22) Anmeldetag: 30.11.2001
(51) Int. Cl.: A01L 3/00

(54) **HUFSCHUTZ**
HOOF GUARD
PROTECTION POUR SABOT

(30) Priorität: 01.12.2000 AT 8832000 U
(43) Veröffentlichungstag der Anmeldung: 27.08.2003
(73) Patentinhaber: "Horse Shoe" - Technologies Entwicklungs- und Vertriebs AG, 1070 Wien (AT)
(72) Erfinder: FORSTNER, Karl, 8503 St.Joseph 41 (AT); ROHRMÜLLER, Michael, A-1210 Wien (AT)
(74) Vertreter: Cunow, Gerda
(86) Internationale Anmeldenummer: PCT/AT2001/000378
(87) Internationale Veröffentlichungsnummer: WO 2002/043480

(56) Entgegenhaltungen:
- EP-A- 0 860 115
- WO-A-99/40782
- GB-A- 2 262 425
- US-A- 5 538 083

## Beschreibung

Die vorliegende Erfindung bezieht sich auf einen Hufschutz für Reittierhufe, insbesondere Pferdehufe, mit einem hufeisenförmigen, eine Laufseite und eine Hufauflageseite aufweisenden Grundkörper sowie wenigstens zwei im bzw. am Grundkörper verschiebbaren und am Grundkörper festlegbaren Aufzügen, welche jeweils aus einem im bzw. am Grundkörper in einer Vertiefung bzw. Ausnehmung gelagerten Schiebeteil und einem relativ zum Schiebeteil in der von der Laufseite abgewandten Richtung im wesentlichen normal vorragenden Anschlagteil zur Anlage am Huf bestehen.

Es sind unterschiedliche Ausführungsformen eines Hufschutzes bzw. eines Hufeisens bekannt, wobei bei einer Mehrzahl von bekannten und insbesondere aus Metall gefertigten Eisen diese eine vorgegebene Größe aufweisen und somit nicht für unterschiedliche Reittiere, insbesondere Pferde, geeignet sind. Es müssen somit beispielsweise für eine Anpassung an unterschiedliche Hufgrößen Nachbearbeitungen derartiger Hufeisen vorgenommen werden und es muß eine entsprechend große Vielzahl von unterschiedliche Größen aufweisenden Hufeisen bereitgestellt werden, um eine entsprechende Auswahl zur Verfügung zu haben. Für den Fall, daß ein nicht ordnungsgemäß angepaßter Hufschutz verwendet wird, besteht die Gefahr eines raschen Ablösens des Hufschutzes vom Huf, so daß entsprechend oft ein neuerliches Beschlagen durchgeführt werden muß.

Zur Behebung dieser Nachteile von vorgegebene Größen ausweisenden Hufeisen bzw. Ausbildungen eines Hufschutzes ist es bekannt geworden, wenigstens teilweise relativ zu einem Grundkörper verschiebbare bzw. verstellbare Aufzüge vorzusehen, wobei in diesem Zusammenhang beispielsweise auf die FR-A 2 758 944 oder die WO 99/40782 verwiesen wird. Bei diesen mehrteiligen Konstruktionen eines Hufschutzes können durch entsprechende Einlageelemente Aufzüge in unterschiedlichen Positionen an einem Grundkörper durch eine Verrastung festgelegt werden, so daß eine Einstellbarkeit zur Anpassung an unterschiedliche Hufausbildungen möglich werden soll.

Die EP 0 860 115 A1 zeigt einen Hufschutz, mit welchem eine Dämpfung von Stößen gegen den Huf verbessert werden soll, wobei dieser Hufschutz in den Sohlenbereich einlegbare, insbesondere über ein Sägezahnprofil einstellbare Aufzüge aufweist.

Die vorliegende Erfindung zielt nun darauf ab, einen Hufschutz der eingangs genannten Art zur Verfügung zu stellen, mit welchem weitere Möglichkeiten einer ordnungsgemäßen und zuverlässigen Anpassung eines Hufschutzes an unterschiedliche Hufgrößen und derart eine ordnungsgemäße Festlegung eines Hufschutzes an einem Huf zur Verfügung gestellt werden.

Zur Lösung dieser Aufgabe ist der erfindungsgemäße Hufschutz im wesentlichen dadurch gekennzeichnet, daß der Schiebeteil und die Vertiefung bzw. Ausnehmung des Grundkörpers mit jeweils wenigstens einem in Verschieberichtung des Verschiebeteils verlaufenden, komplementären Profil zur Ausbildung einer Gleitführung für den Schiebeteil im bzw. am Grundkörper ausgebildet sind und daß die Profile von hinterschnittenen Profilen gebildet sind. Dadurch, daß erfindungsgemäß eine Gleitführung zwischen dem Schiebeteil und der Vertiefung bzw. Ausnehmung des Grundkörpers vorgesehen ist, läßt sich eine im wesentlichen stufenlose Anpassung an unterschiedliche Formen bzw. Größen eines mit dem Hufschutz auszustattanden Hufes erzielen, so daß die Anpassungsmöglichkeiten eines erfindungsgemäßen Hufschutzes weiter vergrößert werden. Zur Erzielung der gewünschten Gleitführung kann mit einfachen Profilen das Auslangen gefunden werden, so daß auch der Bearbeitungsaufwand für die Herstellung des erfindungsgemäßen Hufschutzes entsprechend gering gehalten werden kann. Es ist somit möglich, im wesentlichen durch Bereitstellung einer Grundform für den Grundkörper durch Anpassung der Position der Schiebeteile der Aufzüge im bzw. am Grundkörper eine entsprechende Anpassung an unterschiedlichste Hufformen zur Verfügung zu stellen, wobei nach Festlegung des Hufschutzes am Huf gegebenenfalls vorragende Elemente des Grundkörpers in einfacher Weise entfernt werden können, so daß insgesamt der Arbeitsaufwand beim Beschlagen zur Anpassung an unterschiedliche Hufformen durch Bereitstellung von entsprechenden Größen des Grundkörpers verringert werden kann. Durch Ausbildung als hinterschnittene Profile kann weiters ein insbesondere unerwünschtes, vorzeitiges Austreten verhindert werden.

Während im Prinzip jeweils mit einer einzigen Gleitführung durch Vorsehen eines entsprechenden Profils am Schiebeteil des Aufzugs und eines dazu komplementären Profils im Bereich der Vertiefung bzw. Ausnehmung am Grundkörper das Auslangen gefunden werden kann, wird gemäß einer bevorzugten Ausführungsform vorgeschlagen, daß der Schiebeteil einen normal auf die Verschieberichtung im wesentlichen rechteckigen Querschnitt aufweist und an beiden in Verschieberichtung verlaufenden Längsseiten mit einem mit einem komplementären Profil im Bereich der Seitenbegrenzungen der Ausnehmung bzw. Vertiefung zusammenwirkenden Profil ausgebildet ist. Durch Vorsehen einer Führung an den Längsseiten des Schiebeteils sowie entsprechend komplementären Profilen an den Seitenbegrenzungen der Vertiefungen bzw. Ausnehmungen läßt sich eine sichere und zuverlässige Führung des Schiebeteils ohne Gefahr eines Verkantens bzw. Verklemmens des verschiebbaren Aufzugs während des Beschlagens sicherstellen.

Für eine besonders einfache und kostengünstige Herstellung wird gemäß einer weiters bevorzugten Ausführungsform vorgeschlagen, daß die Profile von Schwalbenschwanzprofilen gebildet sind, wobei derartige Schwalbenschwanzprofile eine entsprechend zuverlässige Führung sicherstellen und insbesondere ein Austreten eines Schiebeteils bzw. des gesamten Aufzugs normal auf die Verschieberichtung mit Sicherheit verhindern können.

Um während des Anpassungsvorgangs ein unbeabsichtigtes Austreten des Aufzugs in Verschieberichtung mit Sicherheit vermeiden zu können, kann vorgesehen sein, daß der Schiebeteil reibschlüssig in der Ausnehmung bzw. Vertiefung aufnehmbar ist, wie dies einer weiters bevorzugten Ausführungsform des erfindungsgemäßen Hufschutzes entspricht. Durch eine derartige Reibschlüssigkeit läßt sich bis zur endgültigen Anpassung an die gewünschte Hufgröße der Schiebeteil in bzw. an der Vertiefung bzw. Ausnehmung über die Gleitführung relativ zum Grundkörper verschieben, da zur Überwindung der Reibschlüssigkeit keine übermäßig großen Kräfte erforderlich werden.

Alternativ bzw. zur Unterstützung einer korrekten Positionierung und zur Vermeidung eines unbeabsichtigten Austretens eines Aufzugs in Verschieberichtung während des Beschlagens wird gemäß einer weiters bevorzugten Ausführungsform vorgeschlagen, daß der Schiebeteil an seiner zur Ausnehmung bzw. Vertiefung gewandten Bodenfläche mit Vorsprüngen und/oder Vertiefungen für ein Zusammenwirken mit einer entsprechend profilierten Auflagefläche der Ausnehmung bzw. Vertiefung ausgebildet ist. Derartige Vorsprünge und/oder Vertiefungen an der Bodenfläche des Schiebeteils können entsprechend einfach und klein ausgebildet sein, um bei einem Zusammenwirken mit einer komplementären Profilierung in der Auflagefläche ein sicheres, provisorisches Halten bzw. Positionieren des Schiebeteils in einer entsprechenden Vertiefung bzw. Ausnehmung des Grundkörpers zu ermöglichen. In diesem Zusammenhang wird gemäß einer weiters bevorzugten Ausführungsform vorgeschlagen, daß die Profilierungen der Bodenfläche des Schiebeteils sowie der Auflagefläche der Ausnehmung von einer Rastverzahnung gebildet sind. Derartige Rastverzahnungen lassen sich nicht nur besonders einfach ausbilden, sondern sie erlauben auch durch eine entsprechende Formgebung unter Berücksichtigung der Verschieberichtung ein einfaches Einführen des Schiebeteils, wobei durch Vorsehen einer entsprechend asymmetrischen Ausführung der Rasten ein unbeabsichtigtes Austreten entgegen der Einschubrichtung zuverlässig verhindert werden kann.

Für eine ordnungsgemäße Festlegung des erfindungsgemäßen Hufschutzes am Huf des Reittiers wird darüber hinaus vorgeschlagen, daß der Grundkörper im Bereich der Ausnehmung bzw. Vertiefung im wesentlichen mittig und in Richtung der Verschieberichtung des Schiebeteils mit einer Mehrzahl von Löchern bzw. Durchbrechungen zur Aufnahme eines Befestigungselements, insbesondere eines Hufnagels, aufweist, wie dies einer weiters bevorzugten Ausführungsform des erfindungsgemäßen Hufschutzes entspricht. Durch Vorsehen einer Mehrzahl von Löchern bzw. Durchbrechungen zur Aufnahme eines Befestigungselements läßt sich nach einer Anpassung durch entsprechende Positionierung der Aufzüge einfach die Festlegung des Hufschutzes am Huf vornehmen, da nicht eine entsprechende Materialstärke des Grundkörpers vom Befestigungselement, insbesondere Hufnagel, durchdrungen werden muß. Für eine korrekte Positionierung eines Hufnagels bzw. Befestigungselements wird darüber hinaus bevorzugt vorgeschlagen, daß die Löcher eine auf einen Hufnagel abgestimmte Querschnittsform und/oder Abmessung aufweisen.

Um trotz der gegebenenfalls vorgesehenen Profilierungen bzw. Verzahnungen, welche ein unbeabsichtigtes Austreten des Aufzugs während des Anpassens zuverlässig verhindern können, auch bei der nachträglichen Beanspruchung vermeiden zu können, wird üblicherweise im Bereich des verschiebbaren Aufzugs ein Befestigungselement, insbesondere ein Hufnagel, vorgesehen. Um nicht eine gegebenenfalls größere Materialstärke des Schiebeteils des Aufzugs bei einem Eintreiben bzw. Einschlagen eines Befestigungselements durchdringen zu müssen, ist darüber hinaus vorgesehen, daß der Schiebeteil im wesentlichen mittig und in Verschieberichtung mit einem sich über wenigstens einen Teilbereich des Verschiebewegs erstreckenden Bereich mit verringerter Materialstärke ausgebildet ist, wie dies einer weiters bevorzugten Ausführungsform des erfindungsgemäßen Hufschutzes entspricht. Durch die im wesentlichen mittige Anordnung eines Bereichs mit verringerter Materialstärke und die ebenfalls vorgeschlagene, im wesentlichen mittige Anordnung einer Mehrzahl von Löchern bzw. Durchbrechungen für einen Hufnagel läßt sich nach der exakten Positionierung des Aufzugs eine sichere Festlegung des Hufschutzes auch im Bereich des Aufzugs und somit insgesamt eine abschließende Positionierung des Aufzugs am Grundkörper sicherstellen.

Unter Berücksichtigung der Anatomie des mit einem erfindungsgemäßen Hufschutz auszustattenden Hufs existieren insbesondere im Vorderbereich des Hufes Teilbereiche, in welchen üblicherweise kein Befestigungselement bzw. kein Hufnagel eingeschlagen werden soll bzw. darf. Um auch in diesem Abschnitt einen insbesondere verschiebbaren und damit anpaßbaren Aufzug am Hufschutz bzw. am Grundkörper festlegen zu können, wird gemäß einer weiters bevorzugten Ausführungsform vorgeschlagen, daß der Schiebeteil im wesentlichen quer zu Verschieberichtung an seiner vom Grundkörper abgewandten Oberseite mit einer Einkerbung bzw. Materialverjüngung versehen ist und im bzw. am Grundkörper mit zueinander abgewinkelten Teilbereichen des Schiebeteils an beiden Seiten der Einkerbung festlegbar ist. Durch die Möglichkeit einer abgewinkelten Anordnung bzw. endgültigen Positionierung des verschiebbaren Aufzugs am bzw. im Grundkörper wird durch die Einnahme der abgewinkelten Position sichergestellt, daß selbst bei Abwesenheit eines Befestigungselements bzw. Hufnagels ein Austreten, insbesondere im Zusammenwirken mit im Bereich der Bodenfläche vorgesehenen Profilierungen bzw. Rastverzahnungen, ausgeschlossen werden kann.

Da üblicherweise in einem seitlichen Bereich die Unterschiede der Hufgrößen am deutlichsten ausgeprägt sind, wird gemäß einer weiters bevorzugten Ausführungsform vorgeschlagen, daß relativ zu einer Mittelachse des Grundkörpers jeweils unter einem spitzen Winkel, insbesondere etwa 30 bis 60°, ein verstellbarer Aufzug vorgesehen ist, so daß durch eine derartige Positionierung der verschiebbaren bzw. verstellbaren Aufzüge eine entsprechend gute Anpaßbarkeit an unterschiedliche Hufgrößen bzw. -ausbildungen erzielbar ist.

Da die erfindungsgemäß vorgeschlagenen, verschiebbaren bzw. verstellbaren Aufzüge für eine Anpassung an unterschiedliche Hufgrößen dienen, kann insbesondere bei großen Hufgrößen eine relativ weit außen liegende Position eines Aufzugs erforderlich sein. Um zu verhindern, daß der Schiebeteil oder allgemein ein Teilbereich des Aufzugs über die Seitenbegrenzung des Grundkörpers vorragt und somit bei einem Gehen bzw. Auftreten auf unebenen Unterlagen beschädigt bzw. abgeschert werden kann, wird bevorzugt vorgeschlagen, daß der Grundkörper im Bereich der Ausnehmung bzw. Vertiefung zur Aufnahme jeweils eines verstellbaren Aufzuges mit einem vom Außenumfang vorragenden Fortsatz, insbesondere einer vorragenden Abschrägung, ausgebildet ist. Derartige Fortsätze bzw. Abschrägungen stellen somit sicher, daß unabhängig von der tatsächlichen Einbaulage keine Teilbereiche der Aufzüge über die seitlichen Außenbegrenzungen des Grundkörpers des Hufschutzes vorragen.

Insbesondere bei Verwendung eines Grundkörpers bzw. Hufschutzes aus Kunststoff, welcher gegenüber metallischen Ausbildungen eines Hufschutzes verbesserte Stoßdämpfungseigenschaften aufweist, muß für eine entsprechende Abriebfestigkeit der Laufseite bzw. Sohle des Hufschutzes gesorgt werden. In diesem Zusammenhang wird erfindungsgemäß vorgeschlagen, daß der Grundkörper an der Laufseite wenigstens teilweise mit einer Auflage bzw. Beschichtung aus einem gegenüber dem Material, insbesondere Kunststoff, des Grundkörpers widerstandsfähigeren bzw. abriebfesteren Material ausgebildet ist, wie dies einer weiters bevorzugten Ausführungsform der Erfindung entspricht. Es kann somit aus einem entsprechend elastischen bzw. stoßdämpfenden Material der Hauptbereich des Grundkörpers ausgebildet sein, während zusätzlich eine entsprechend widerstandsfähigere bzw. abriebfestere Laufseite am Grundkörper festlegbar ist.

Die Erfindung wird nachfolgend anhand von in der beiliegenden Zeichnung schematisch dargestellten Ausführungsbeispielen näher erläutert. In dieser zeigen:
Fig. 1 eine Draufsicht auf eine erste Ausführungsform eines erfindungsgemäßen Hufschutzes;
Fig. 2 eine Ansicht von unten auf den erfindungsgemäßen Hufschutz gemäß Fig. 1;
Fig. 3 einen Schnitt nach der Linie III-III durch den Hufschutz gemäß Fig. 1;
Fig. 4 einen Schnitt nach der Linie IV-IV durch den Hufschutz gemäß Fig. 1;
Fig. 5 Detailansichten in vergrößertem Maßstab eines in dem Hufschutz gemäß Fig. 1 aufgenommenen, verschiebbaren bzw. verstellbaren Aufzugs, wobei Fig. 5a eine Ansicht auf den Aufzug von vorne ist, Fig. 5b eine Draufsicht auf den Aufzug ist und Fig. 5c eine Seitenansicht des Aufzugs ist;
Fig. 6 einen Teilschnitt nach der Linie VI-VI der Fig. 1 ebenfalls in vergrößertem Maßstab des Bereichs der Aufnahme eines verschiebbaren Aufzugs;
Fig. 7 in einer zu Fig. 5 ähnlichen Darstellung eine abgewandelte Ausführungsform eines verstellbaren Aufzugs eines erfindungsgemäßen Hufschutzes, wobei Fig. 7a wiederum eine Vorderansicht und Fig. 7b eine Draufsicht zeigt; und
Fig. 8 in einer zu Fig. 6 ähnlichen Darstellung wiederum einen Teilschnitt durch den Bereich der Aufnahme des in Fig. 7 dargestellten Aufzugs am Grundkörper eines erfindungsgemäßen Hufschutzes.

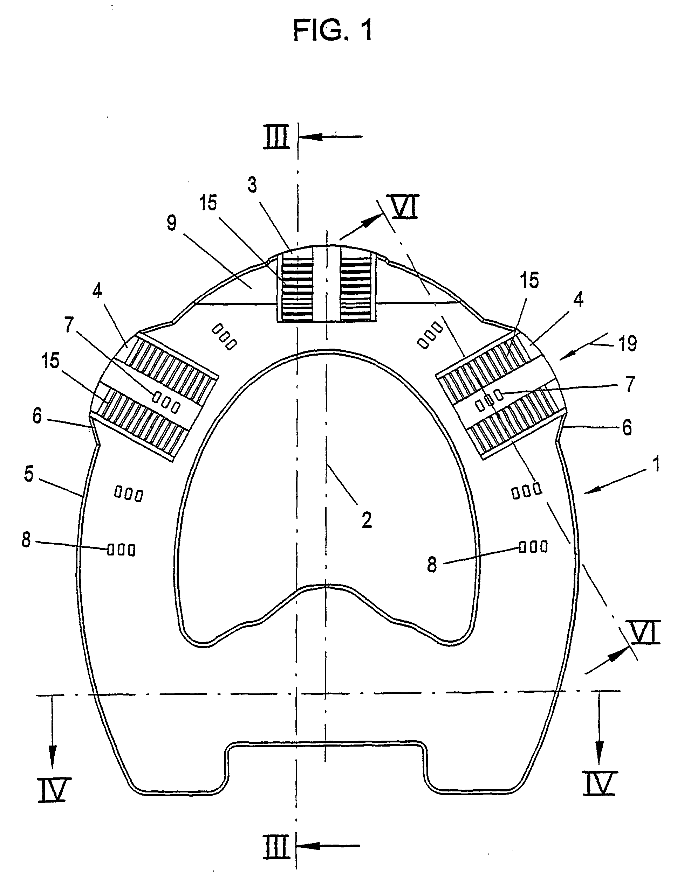

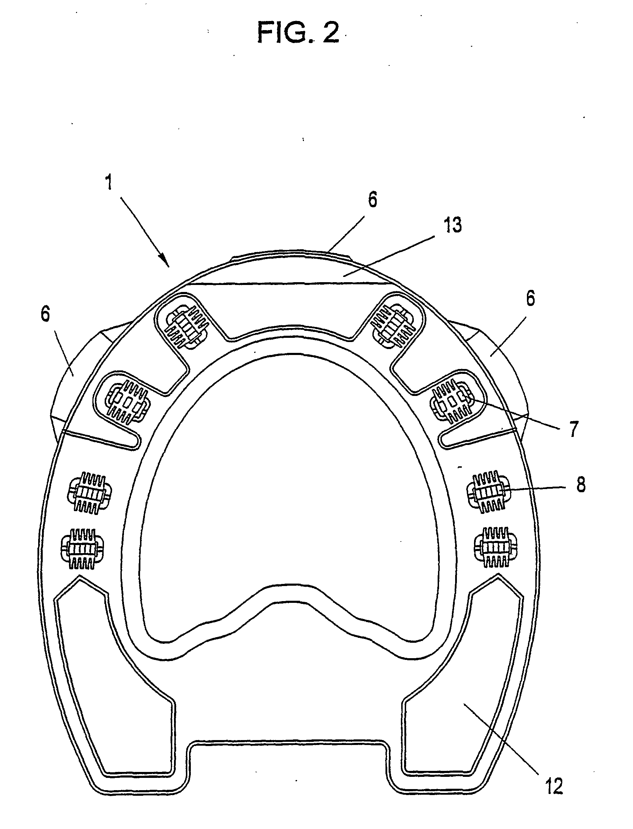

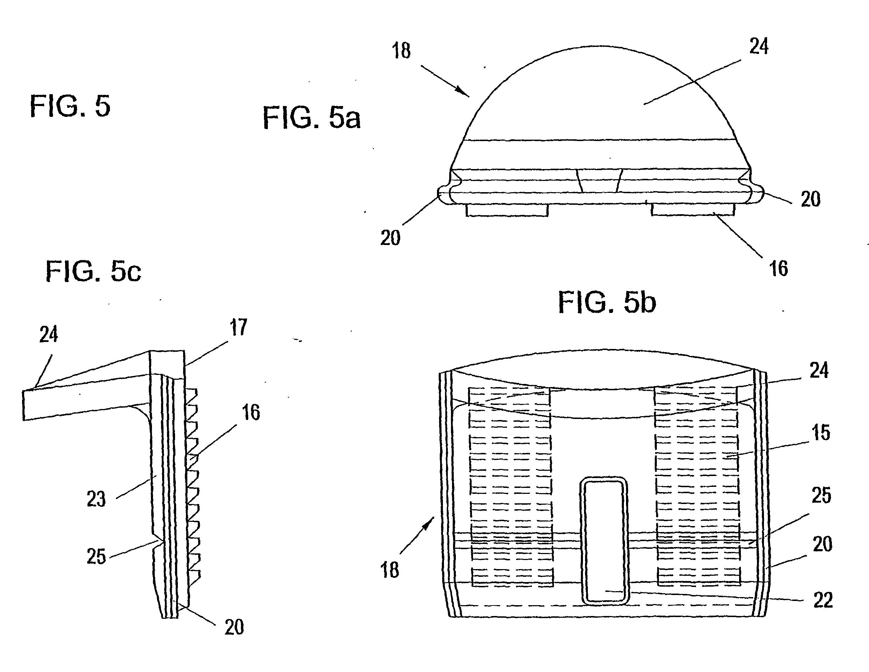

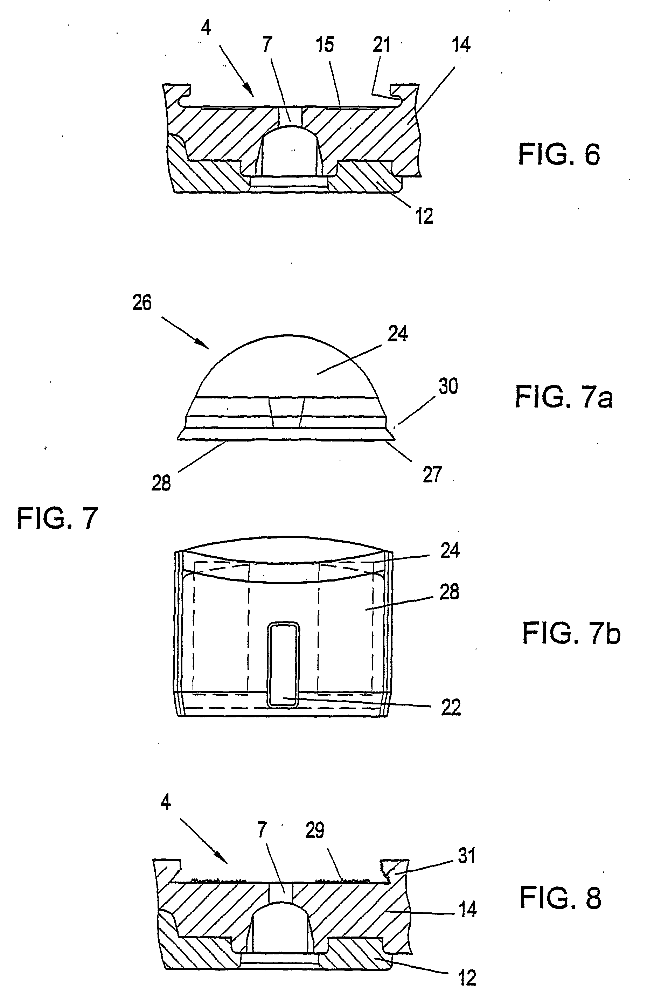

In den Darstellungen gemäß Fig. 1 und 2 ist ein Hufschutz 1 in einer Draufsicht als auch in einer Unteransicht gezeigt, wobei der gezeigte Hufschutz 1 beispielsweise aus einem Kunststoff ausgebildet ist. Sowohl im vorderen Bereich, im wesentlichen mittig zur Längsachse 2, des Hufschutzes 1 als auch in einem spitzen Winkel zur der Längsachse 2 sind bei der in den Fig. 1 und 2 dargestellten Ausführungsform drei Vertiefungen bzw. Ausnehmungen 3 bzw. 4 vorgesehen, welche zur Aufnahme von verstellbaren bzw. verschiebbaren Aufzügen dienen, wie diese beispielsweise in den Fig. 5 und 7 im Detail dargestellt sind. Im Bereich der Vertiefungen bzw. Ausnehmungen 3 und 4, welche in den nachfolgenden Figuren noch im Detail ersichtlich sind, weist der Hufschutz 1 vom Außenumfang 5 desselben vorragende Vorsprünge bzw. Abschrägungen 6 auf, welche insbesondere bei den zur Längsachse 2 des Hufschutzes 1 versetzten Vertiefungen bzw. Ausnehmungen 4 deutlich ersichtlich sind.

Zur Festlegung des Hufschutzes 1 an einem Huf ist im Bereich der Vertiefungen bzw. Ausnehmungen 4 im wesentlichen mittig und im wesentlichen radial eine Mehrzahl von Durchbrechungen bzw. Löchern 7 vorgesehen, in welche in weiterer Folge ein Befestigungselement, insbesondere ein Hufnagel, einbringbar ist. Außerhalb der Bereiche 3 bzw. 4 für die Aufnahme der verstellbaren Aufzüge sind weitere Durchbrechungen bzw. Löcher 8 für Hufnägel angedeutet. Demgegenüber ist im Bereich der entlang der Längsachse 2 positionierten Vertiefung bzw. Ausnehmung 3 keine Durchbrechung bzw. kein Loch vorgesehen, da in diesem Bereich üblicherweise kein Hufnagel eingebracht wird. Darüber hinaus weisen die Löcher bzw. Durchbrechungen 7 und 8 ein auf die Querschnittsform des verwendeten Befestigungselements bzw. Hufnagels angepaßte Außenkontur auf.

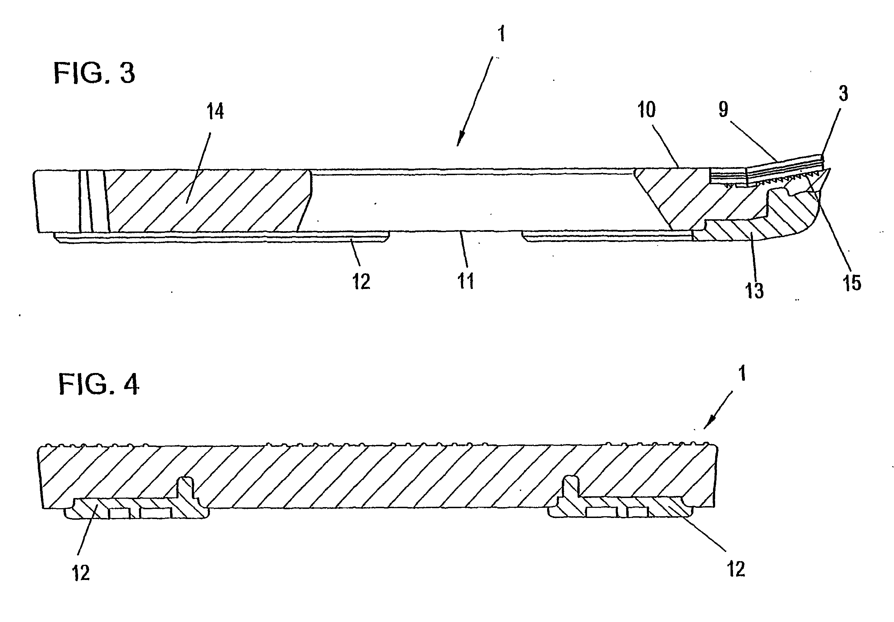

Für ein ordnungsgemäßes Festlegen eines verschiebbaren Aufzugs in der Vertiefung bzw. Ausnehmung 3, in welcher kein Hufnagel für eine abschließende Befestigung vorgesehen ist, ist die Ausnehmung bzw. Vertiefung 3 abgewinkelt ausgebildet, wie dies insbesondere aus der Darstellung gemäß Fig. 3 deutlich ersichtlich ist. Der Hufschutz 1 weist im vordersten Abschnitt einen Bereich 9 auf, welcher unter einem Winkel relativ zu der mit 10 bezeichneten Hufauflageseite verläuft, so daß auch die in Fig. 3 ersichtliche Seitenbegrenzung der Vertiefung bzw. Ausnehmung 3 entsprechend abgewinkelt ist.

Aus den Darstellungen gemäß den Fig. 2, 3 und 4 ist weiters ersichtlich, daß in Teilbereichen an der Laufseite 11 eine zusätzliche Auflage bzw. Beschichtung 12 bzw. 13 vorgesehen ist, welche insbesondere aus einem gegenüber dem Material des Grundkörpers 14 unterschiedlichen, insbesondere widerstandsfähigeren bzw. abriebfesteren Material ausgebildet ist.

Die in Fig. 1 dargestellten Ausnehmungen bzw. Vertiefungen 3 bzw. 4 weisen darüber hinaus eine Profilierung, insbesondere eine Rastverzahnung 15 im Bereich der Auflagefläche auf, wobei diese Rastverzahnung 15 mit einer komplementären Profilierung bzw. Rastverzahnung 16 an der Bodenfläche 17 des in Fig. 5 im Detail und in größerem Maßstab dargestellten, verschiebbaren Aufzugs 18 zusammenwirkt. Durch entsprechende Formgebung und asymmetrische Anordnung der einzelnen Zähne der Verzahnungen 15 und 16 läßt sich somit ein einfaches Einbringen bzw. Einschieben in Richtung des Pfeils 19 in Fig. 1 eines derartigen Aufzugs 18 ermöglichen, wobei ein unbeabsichtigtes Herausfallen des Aufzugs 18 durch die Verzahnungen 15 bzw. 16 verhindert wird.

Für eine ordnungsgemäße Führung des Aufzugs 18 in einer der Vertiefungen bzw. Ausnehmungen 3 bzw. 4, welche in einem Teilschnitt in vergrößertem Maßstab in Fig. 6 dargestellt ist, weist darüber hinaus der Aufzug 18 an seinen Seitenflächen eine vorragende Profilierung 20 auf, welche in Verschieberichtung in einem entsprechend komplementären Profil 21 an den Seitenwänden der Ausnehmung bzw. Vertiefung 3 bzw. 4 aufgenommen wird. Es läßt sich über diese durch die Profile 20 und 21 gebildete Gleitführung ein sicheres Einbringen eines Aufzugs 18 in eine der Ausnehmungen 3 bzw. 4 vornehmen, wobei über die Verzahnungen 15 und 16 ein Herausfallen vor einem Eintreiben eines Nagels bzw. Befestigungselements, welches durch eine im wesentlichen mittige Durchbrechung 7 im Bereich der Ausnehmung 4 als auch durch einen mit verringertem Materialquerschnitt mittigen Bereich 22 des Aufzugs 18 hindurchtritt, verhindert wird.

In Fig. 5 ist weiters ein von dem im wesentlichen parallel zur Auflagefläche 10 des Grundkörpers 14 verlaufenden Schiebeteil 23 des Aufzugs 18 im wesentlichen normal aufragender Anschlagteil 24, welcher in Anlage an den zu beschlagenden Huf gelangt, angedeutet.

Um einheitliche Aufzüge 18 im Bereich der Ausnehmungen bzw. Vertiefungen 4, in welchen eine endgültige Festlegung über ein Befestigungselement bzw. einen Hufnagel erfolgt, als auch im vorderen, mittigen Bereich in der Ausnehmung bzw. Vertiefung 3, welche abgewinkelt verläuft, verwenden zu können, weist darüber hinaus, wie dies in den Fig. 5b und 5c deutlich ersichtlich ist, der Aufzug 18 an seiner von der Bodenfläche 17 abgewandten Oberfläche eine Einkerbung 25 auf, welche abgestimmt auf die zueinander abgewinkelten Teilbereiche 9 und 10 der Auflagefläche des Hufschutzes 1 angeordnet ist, um durch ein Eintreiben des Aufzugs 18 in die abgewinkelte Gleitführung der Ausnehmung bzw. Vertiefung 3 und das nach einem Beschlagen beim Auftreten entstehende Gewicht ebenfalls eine sichere Verankerung des Aufzugs 18 auch ohne Vorsehen eines Befestigungselements bzw. Hufnagels zu ermöglichen.

In Fig. 7 ist eine abgewandelte Ausführungsform eines Aufzugs 26 dargestellt, wobei anstelle der Profilierung bzw. Rastverzahnung im Bereich der Bodenfläche 27 ein rauhe Oberfläche aufweisende Teilbereiche 28 angedeutet sind, um nach einem Einbringen in eine Ausnehmung bzw. Vertiefung 4, welche in Fig. 8 dargestellt ist, mit entsprechend rauhen Teilbereichen 29 einen Reibschluß für ein sicheres, vorläufiges Halten des Aufzugs 26 zu ermöglichen.

Darüber hinaus ist anstelle des in den Fig. 5 und 6 dargestellten, abgerundeten Profils 20 bzw. 21 zur Ausbildung der Gleitführung in den Fig. 7 und 8 ein hinterschnittenes Profil, beispielsweise nach Art eines Schwalbenschwanzprofils 30 und 31, vorgesehen, um wiederum eine Gleitführung für ein sicheres Einbringen des Aufzugs 26 bereitzustellen.

Selbstverständlich können anstelle der Ausführung von vorragenden Profilen 20 bzw. 30 bei den Ausbildungen gemäß den Fig. 5 und 7 an den Aufzügen 18 bzw. 26 und entsprechenden, vertieften Profilen 21 und 31 im Bereich der Ausnehmung bzw. Vertiefung 4 die Profile an den Seitenwänden der Ausnehmungen 3 bzw. 4 vorragend sein und mit entsprechenden vertieften bzw. hinterschnittenen Profilen an den Seitenkanten der Aufzüge 18 bzw. 26 zusammenwirken.

Darüber hinaus kann anstelle des Vorsehens von komplementären Profilen zur Ausbildung der Gleitführungen an beiden Seitenkanten bzw. -wänden sowohl des Aufzugs 18 bzw. 26 als auch der Ausnehmungen bzw. Vertiefungen 3 bzw. 4 beispielsweise eine entsprechende komplementäre Profilierung zur Ausbildung einer Gleitführung im Bereich der Bodenfläche des Aufzugs 18 bzw. 26 und der Auflagefläche einer zugeordneten Ausnehmung bzw. Vertiefung 3 bzw. 4 vorgesehen sein, wobei wesentlich ist, daß über die Gleitführung oder zusätzlich vorzusehende Profilierungen, insbesondere Rastverzahnungen, zumindest ein provisorisches Halten der Aufzüge 18 bzw. 26 nach einer Positionierung in einer Ausnehmung 3 bzw. 4 und vor dem endgültigen Eintreiben eines Befestigungselements zur Verfügung gestellt werden muß.

## Patentansprüche

1. Hufschutz für Reittierhufe, insbesondere Pferdehufe, mit einem hufeisenförmigen, eine Laufseite (11) und eine Hufauflageseite (10) aufweisenden Grundkörper (1) sowie wenigstens zwei im bzw. am Grundkörper (1) verschiebbaren und am Grundkörper (1) festlegbaren Aufzügen (18), welche jeweils aus einem im bzw, am Grundkörper (1) in einer Vertiefung bzw. Ausnehmung gelagerten Schiebeteil (23) und einem relativ zum Schiebeteil (23) in der von der Laufseite (11) abgewandten Richtung im wesentlichen normal vorragenden Anschlagteil (24) zur Anlage am Huf bestehen, **dadurch gekennzeichnet, daß** der Schiebeteil (23) und die Vertiefung bzw. Ausnehmung (3, 4) des Grundkörpers (1) mit jeweils wenigstens einem in Verschieberichzung (19) des Verschiebeteils (23) verlaufenden, komplementären Profil (20, 21, 30, 31) zur Ausbildung einer Gleitführung für den Schiebeteil (23) im bzw. am Grundkörper (1) ausgebildet sind und daß die Profile von hinterschnittenen Profilen gebildet sind.

2. Hufschutz nach Anspruch 1, **dadurch gekennzeichnet, daß** der Schiebeteil (23) einen normal auf die Verschieberichtung (19) im wesentlichen rechteckigen Querschnitt aufweist und an beiden in Verschieberichtung verlaufenden Längsseiten mit einem mit einem komplementären Profil (21, 31) im Bereich der Seitenbegrenzungen der Ausnehmung bzw. Vertiefung zusammenwirkenden Profil (20, 30) ausgebildet ist.

3. Hufschutz nach Anspruch 1 oder 2, **dadurch gekennzeichnet, daß** die Profile von Schwalbenschwanzprofilen (30, 31) gebildet sind.

4. Hufschutz nach Anspruch 1, 2 oder 3, **dadurch gekennzeichnet, daß** der Schiebeteil (23) reibschlüssig in der Ausnehmung bzw. Vertiefung (3, 4) aufnehmbar ist.

5. Hufschutz nach einem der Ansprüche 1 bis 4, **dadurch gekennzeichnet, daß** der Schiebeteil (23) an seiner zur Ausnehmung bzw. Vertiefung (3, 4) gewandten Bodenfläche mit Vorsprüngen und/oder Vertiefungen für ein Zusammenwirken mit einer entsprechend profilierten Auflagefläche (15) der Ausnehmung bzw. Vertiefung (3, 4) ausgebildet ist.

6. Hufschutz nach Anspruch 5, **dadurch gekennzeichnet, daß** die Profilierungen der Bodenfläche des Schiebeteils (23) sowie der Auflagefläche der Ausnehmung (3, 4) von einer Rastverzahnung (15, 16) gebildet sind.

7. Hufschutz nach einem der Ansprüche 1 bis 6, **dadurch gekennzeichnet, daß** der Grundkörper (1) im Bereich der Ausnehmung bzw. Vertiefung (3, 4) im wesentlichen mittig und in Richtung der Verschieberichtung (19) des Schiebeteils (23) mit einer Mehrzahl von Löchern bzw. Durchbrechungen (7) zur Aufnahme eines Befestigungselements, insbesondere eines Hufnagels, aufweist.

8. Hufschutz nach Anspruch 7, **dadurch gekennzeichnet, daß** die Löcher (7) eine auf einen Hufnagel abgestimmte Querschnittsform und/oder Abmessung aufweisen.

9. Hufschutz nach einem der Ansprüche 1 bis 8, **dadurch gekennzeichnet, daß** der Schiebeteil (23) im wesentlichen mittig und in Verschieberichtung (19) mit einem sich über wenigstens einen Teilbereich des Verschiebewegs erstreckenden Bereich (22) mit verringerter Materialstärke ausgebildet ist.

10. Hufschutz nach einem der Ansprüche 1 bis 9, **dadurch gekennzeichnet, daß** der Schiebeteil (23) im wesentlichen quer zu Verschieberichtung an seiner vom Grundkörper (1) abgewandten Oberseite mit einer Einkerbung bzw. Materialverjüngung (25) versehen ist und im bzw. am Grundkörper (1) mit zueinander abgewinkelten Teilbereichen des Schiebeteils (23) an beiden Seiten der Einkerbung (25) festlegbar ist.

11. Hufschutz nach einem der Ansprüche 1 bis 10, **dadurch gekennzeichnet, daß** relativ zu einer Mittelachse (2) des Grundkörpers (1) jeweils unter einem spitzen Winkel, insbesondere etwa 30 bis 60°, ein verstellbarer Aufzug (18, 26) vorgesehen ist.

12. Hufschutz nach einem der Ansprüche 1 bis 11, **dadurch gekennzeichnet, daß** der Grundkörper (1) im Bereich der Ausnehmung bzw. Vertiefung (3, 4) zur Aufnahme jeweils eines verstellbaren Aufzuges (18, 26) mit einem vom Außenumfang vorragenden Fortsatz (6), insbesondere einer vorragenden Abschrägung, ausgebildet ist.

13. Hufschutz nach einem der Ansprüche 1 bis 12, **dadurch gekennzeichnet, daß** der Grundkörper (1) an der Laufseite (11) wenigstens teilweise mit einer Auflage bzw. Beschichtung (12, 13) aus einem gegenüber dem Material, insbesondere Kunststoff, des Grundkörpers (1) widerstandsfähigeren bzw. abriebfesteren Material ausgebildet ist.

## Claims

1. A hoof protection device for the hooves of riding animals and, in particular, horses, including a horseshoe-shaped base body (1) having a running side (11) and a hoof plating side (10) as well as at least two adaptation or pull-up means (18) capable of being displaced in or on the base body (1) and fixed to the base body (1), said pull-up means being each composed of a sliding part (23) mounted in or on the base body (1) in a depression or recess thereof as well as a stop portion (24) protruding substantially normally relative to the sliding part (23) in the direction facing away from the running side (11) for abutment on the hoof, **characterized in that** the sliding part (23) and the depression or recess (3, 4) of the base body (1) are each designed to comprise at least one complementary section (20, 21, 30, 31) extending in the direction of displacement (19) of the sliding part (23) for the formation of a slideway for the sliding part (23) in or on the base body (1), and that said sections are comprised of undercut sections.

2. A hoof protection device according to claim 1, **characterized in that** the sliding part (23) has a substantially rectangular cross section normal to the direction of displacement (19) and, on the two longitudinal sides extending in the direction of displacement, is formed with a section or profile (20, 30) cooperating with a complementary section or profile (21, 31) provided in the region of the lateral limitations of the recess or depression.

3. A hoof protection device according to claim 1 or 2, **characterized in that** the sections are comprised of dovetail sections (30, 31).

4. A hoof protection device according to claim 1, 2 or 3, **characterized in that** the sliding part (23) is capable of being received in the recess or depression (3, 4) by frictional engagement.

5. A hoof protection device according to any one of claims 1 to 4, **characterized in that** the sliding part (23), on its bottom surface facing the recess or depression (3, 4), is formed with projections and/or depressions intended to cooperate with an accordingly sectioned abutment surface (15) of the recess or depression (3, 4).

6. A hoof protection device according to claim 5, **characterized in that** that the sections of the bottom surface of the sliding part (23) as well as the abutment surface of the recess (3, 4) are formed by latch toothings (15, 16).

7. A hoof protection device according to any one of claims 1 to 6, **characterized in that** the base body (1) comprises a plurality of holes or openings (7) in the region of the recess or depression (3, 4), substantially in the center and in the sense of the direction of displacement (19) of the sliding part (23), to receive a fastening element and, in particular, a horse nail.

8. A hoof protection device according to claim 7, **characterized in that** the holes (7) have cross sectional shapes and/or dimensions mating with horse nails.

9. A hoof protection device according to any one of claims 1 to 8, **characterized in that** the sliding part (23), substantially in its center and in the direction of displacement (19), is formed with a reduced material thickness zone (22) extending at least over a partial region of the displacement path.

10. A hoof protection device according to any one of claims 1 to 9, **characterized in that** the sliding part (23) is provided with a notch or material taper (25) substantially transverse to the direction of displacement on its upper side facing away from the base body (1) and capable of being fixed in or on the base body (1) on both sides of the notch (25) by relatively angled partial regions of the sliding part (23).

11. A hoof protection device according to any one of claims 1 to 10, **characterized in that** an adjustable pull-up means (18, 26) is each provided at an acute angle and, in particular, at about 30 to 60° relative to a central axis (2) of the base body (1).

12. A hoof protection device according to any one of claims 1 to 11, **characterized in that** the base body (1), in the region of the recess or depression (3, 4) intended to receive one adjustable pull-up means (18, 26) each, is formed with a protrusion (6) projecting from the external periphery and, in particular, a protruding chamfer.

13. A hoof protection device according to any one of claims 1 to 12, **characterized in that** the base body (1) is formed on its running side (11) at least partially with a lining or coating (12, 13) made of a material of elevated resistance or abrasion resistance as against the material, particularly plastics material, of the base body (1).

## Revendications

1. Protection de sabot pour des sabots de montures, en particulier des sabots de chevaux, comprenant un corps de base (1) en forme de fer à cheval qui présente un côté foulée (11) et un côté appui de sabot (10), ainsi qu'au moins deux élévateurs (18) qui peuvent coulisser dans ou sur le corps de base (1) et être fixés sur le corps de base (1), qui se composent chacun d'une partie coulissante (23) logée dans ou sur le corps de base (1) dans un creux ou évidement et d'une partie de butée (24) pour l'appui sur le sabot, en saillie essentiellement normale par rapport à la partie coulissante (23) dans le sens opposé au côté foulée (11), **caractérisée en ce que** la partie coulissante (23) et le creux ou évidement (3, 4) du corps de base (1) sont réalisés avec chacun au moins un profil complémentaire (20, 21, 30, 31), s'étendant dans la direction de déplacement (19) de la partie coulissante (23), pour la réalisation d'un guidage glissant pour la partie coulissante (23) dans ou sur le corps de base (1), et que les profilés sont formés de profilés en contre-dépouille.

2. Protection de sabot suivant la revendication 1, **caractérisée en ce que** la partie coulissante (23) présente une section transversale essentiellement rectangulaire normale à la direction de déplacement (19) et est réalisée, sur deux côtés longitudinaux s'étendant dans la direction de déplacement, avec un profil (20, 30) qui coopère avec un profil complémentaire (21, 31) dans la zone des délimitations latérales du creux ou évidement.

3. Protection de sabot suivant l'une des revendications 1 et 2, **caractérisée en ce que** les profilés sont formés de profilés en queue d'aronde (30, 31).

4. Protection de sabot suivant l'une des revendications 1, 2 et 3, **caractérisée en ce que** la partie coulissante (23) peut être logée par force de friction dans l' évidement ou creux (3, 4).

5. Protection de sabot suivant l'une des revendications 1 à 4, **caractérisée en ce que** la partie coulissante (23) est réalisée sur sa surface de fond tournée vers l'évidement ou creux (3, 4) avec des saillies ou des creux pour une coopération avec une surface d'appui (15), profilée en conséquence, de l'évidement ou creux (3, 4).

6. Protection de sabot suivant la revendication 5, **caractérisée en ce que** les profilages de la surface de fond de la partie coulissante (23) ainsi que de la surface d'appui de l'évidement (3, 4) sont formés par une denture d'arrêt (15, 16).

7. Protection de sabot suivant l'une des revendications 1 à 6, **caractérisée en ce que** le corps de base (1) présente dans la zone de l'évidement ou creux (3, 4), essentiellement au centre et dans la direction de déplacement (19) de la partie coulissante (23), une pluralité de trous ou percées (7) pour recevoir un élément de fixation, en particulier un clou à ferrer.

8. Protection de sabot suivant la revendications 7, **caractérisée en ce que** les trous (7) présentent une forme de section transversale et/ou une dimension adaptées à un clou à ferrer.

9. Protection de sabot suivant l'une des revendications 1 à 8, **caractérisée en ce que** la partie coulissante (23) est réalisée, essentiellement au centre et dans la direction de déplacement (19), avec une zone (22) d'épaisseur de matériau réduite qui s'étend sur au moins une zone partielle de la trajectoire de déplacement.

10. Protection de sabot suivant l'une des revendications 1 à 9, **caractérisée en ce que** la partie coulissante (23) est munie d'une encoche ou d'un rétrécissement de matériau (25) de façon essentiellement transversale à la direction de déplacement sur son côté supérieur opposé au corps de base (1), et peut être fixée dans ou sur le corps de base (1) par des zones partielles coudées l'une par rapport à l'autre de la partie coulissante (23) sur les deux côtés de l'encoche (25).

11. Protection de sabot suivant l'une des revendications 1 à 10, **caractérisée en ce qu'**un élévateur (18, 26) ajustable est prévu à chaque fois sous un angle aigu, en particulier d'environ 30 à 60°, par rapport à un axe médian (2) du corps de base (1).

12. Protection de sabot suivant l'une des revendications 1 à 11, **caractérisée en ce que** le corps de base (1) est réalisé avec un prolongement (6) dépassant du pourtour extérieur, en particulier un chanfrein en saillie, dans la zone de l'évidement ou creux (3, 4) pour recevoir un élévateur ajustable (18, 26) respectif.

13. Protection de sabot suivant l'une des revendications 1 à 12, **caractérisée en ce que** le corps de base (1) est réalisé sur le côté foulée (11), au moins en partie, avec un dépôt ou revêtement (12, 13) en un matériau plus résistant ou plus résistant à l'usure que le matériau, en particulier la matière plastique, du corps de base (1).
